# EUROPÄISCHE PATENTSCHRIFT

(11) **EP 0 563 913 B1**
(45) Veröffentlichungstag und Bekanntmachung des Hinweises auf die Patenterteilung: **29.05.1996**
(21) Anmeldenummer: 93105320.1
(22) Anmeldetag: 31.03.1993
(51) Int. Cl.: B60P 1/48, B60P 1/64

(54) **Verfahren, Transportsystem und Absetzkipper zum Bewegen eines Silos und hierfür eingerichteter Silo**
Procedure, transport system and multi bucket system lorry for moving a silo and a silo equipped therefor
Procédé, système de transport et camion à benne basculante pour déplacer un silo et silo équipé pour cela

(30) Priorität: 02.04.1992 DE 4211211
(43) Veröffentlichungstag der Anmeldung: 06.10.1993
(73) Patentinhaber: Bock, Normann, D-28857 Syke (DE)
(72) Erfinder: Bock, Normann, D-28857 Syke (DE)
(74) Vertreter: Jabbusch, Wolfgang, Dr.Jur. Jabbusch, Wehser & Lauerwald Patentanwälte

(56) Entgegenhaltungen:
- CH-A- 325 716
- DE-A- 2 348 971
- DE-A- 3 312 559
- DE-B- 2 027 259
- DE-U- 1 885 412
- DE-U- 8 334 244
- DE-U- 8 612 228
- DE-U- 9 100 921

## Beschreibung

Die Erfindung betrifft eine Silotransportvorrichtung, umfassend ein auf einem Fahrzeug angeordnetes Wechselgerät in Form eines Absetzkippers, der zwei im wesentlichen parallel zueinander angeordnete, im hinteren Bereich einer Fahrzeug-Ladefläche angelenkte, um zum hinteren Rand der Ladefläche etwa parallel laufende Achsen schwenkbare Arme aufweist, an deren freien Enden Angriffsorgane angeordnet sind, mit denen an einem im wesentlichen zylinderischen Silo befindliche Angriffspunkte erfaßbar sind, die am Silo in sekantieller Orientierung und miteinander fluchtend derart angeordnet sind, daß sich die Arme in Bezug zum auf der Ladefläche liegend aufgenommenen Silo unterhalb der Ebene des dabei horizontalen Silo-Durchmessers und innerhalb der Grenzen der von dieser horizontalen Durchmesserebene überspannten Fläche befinden.

Darüber hinaus betrifft die Erfindung einen in Verbindung mit der Silotransportvorrichtung zu verwendenden Silo.

Eine Silotransportvorrichtung der vorbezeichneten Gattung ist nach der DE-U-8 334 244 bekannt.

Silos werden, insbesondere wenn sie Schüttgüter wie z.B. Zement, Sand, Mörtelmischungen, Gips, Kies oder dergleichen enthalten, lotrecht aufragend aufgestellt, und zwar unmittelbar dort, wo die Schüttgüter benötigt werden. Hierbei wird der Silo häufig wie eine Warenverpackung behandelt, indem er in der Regel mit einem Fahrzeug in gefülltem Zustand an die Baustelle gebracht und dort aufgestellt wird. Sobald der Silo leer ist, wird er abtransportiert und durch einen neuen vollen Silo ersetzt. Dies bedeutet, daß derartige Silos relativ häufig bewegt werden müssen, insbesondere transportiert, aufgeladen, abgeladen und aufgestellt werden müssen.

Häufig werden für die genannten Zwecke sogenannte Freifallsilos verwendet, die Silobehälter aufweisen, die weitgehend zylindrisch ausgebildet sind, also in ihrem Querschnitt rund sind, so daß sie auch druckbelastet werden können.

Für die Rentabilität des Transportes ist es wünschenswert, dem Silo ein möglichst großes Fassungsvolumen zu geben. In dieser Hinsicht ist jedoch der Breite bzw. dem Durchmesser des Silos, der in der Regel liegend transportiert wird, eine Grenze durch Straßenverkehrs-Zulassungsordnungen gesetzt, die vorsehen, daß auch die auf den Fahrzeugen transportierten Güter, die für ein Fahrzeug im Straßenverkehr zugelassene Höchstbreite nicht überschreiten. Diese Höchstbreite liegt in der Bundesrepublik Deutschland beispielsweise bei 2,50 m. Diese zugelassene Breite für Fahrzeuge wird durch die genannten Silos möglichst durchmessermäßig ausgenutzt. Wie es auch bei der bekannten Silotransportvorrichtung der Fall ist, werden das Fahrzeug für einen solchen Silo und der Silo einander angepaßt, und somit zum Spezialfahrzeug für den Transport eines Spezialsilos. Hierdurch wird eine solches Spezialfahrzeug aber nur für diesen bestimmten Zweck einsetzbar, d.h., daß ein Silotransportfahrzeug nur für den Silotransport geeignet ist, in einer eventuell verbleibenden übrigen Zeit, die nicht für Silotransporte anfällt, also nicht für andere Zwecke eingesetzt werden kann.

Der Erfindung liegt daher die Aufgabe zugrunde, eine Vorrichtung der vorbezeichneten Gattung aufzuzeigen, mit der ein Silo und andere an sich bekannte Behälter in straßenverkehrszulässiger und gleichzeitig rentabler Weise transportierbar sind, wobei die Vorrichtung auch gleichzeitig dafür geeignet sein soll, den Silo ebenso wie weitere Behälter in anderer Weise zu bewegen, d.h. aufzuladen, abzuladen und aufzustellen.

Die Aufgabe ist erfindungsgemäß dadurch gelöst, daß jedes Angriffsorgan weitgehend als zum wenigstens teilweisen Umgriff eines als Angriffspunkt am Silo dienenden Zapfens vorgesehene gabelförmige Klaue ausgebildet ist, daß die Arme des Fahrzeugs von einer etwa waagerechten Position über der Ladefläche mehr als 180° in eine vom Fahrzeug weg nach unten geneigte Stellung verschwenkbar angelenkt sind, daß die Arme des Fahrzeugs längenveränderbar, vorzugsweise teleskopierbar, sind, daß jeder Arm einzeln in Bezug auf Längenveränderung und/oder Verschwenkung steuerbar ist, und daß eine Ladeflächenverlängerung vorgesehen ist, die einen längsverfahrbaren Schlitten aufweist, der mit einer Aufnahme für vorzugsweise eine Kante des Fußbereiches des Silos versehen ist.

Durchzuführende Umrüstungen des Fahrzeuges und des Silos zur gegenseitigen Anpassung sind kostengünstig durchführbar und stören nicht bei den übrigen Einsatzzwecken des Fahrzeuges, die also weiter erfüllt werden können. Beispielsweise werden Container an den Armen eines Absetzkippers zumeist mit Ketten abgehängt, die zum Silotransport entweder verbleiben oder abgenommen werden könnten. Jedenfalls schließen sich die herkömmlichen Befestigungsorgane an Behältern und eventuelle Siloerfassungsorgane nicht gegenseitig aus.

Die Angriffspunkte am Silo sind weitgehend zapfenartig ausgebildet und entsprechend geeignete Angriffsorgane sind am Fahrzeug vorgesehen, wobei diese als gabelförmige Klauen ausgebildet sind, die durch Bolzen, Lippen oder dergleichen vorzugsweise verriegelbar sind. Die Klauen werden an den Armen des Fahrzeuges vorzugsweise so angeordnet, daß der Arm mit den Klauen insgesamt gekröpft ausgebildet ist, so daß die Klauen bezogen auf die Ladefläche des Fahrzeuges etwas nach oben gerichtet offen sind. Bei dieser Orientierung können die Zapfen des Silos besonders sicher erfaßt werden, und zwar in jeder Schwenkstellung der Arme beim Bewegen des Silos.

Da die Zapfen als Achszapfen in sekantieller Orientierung am Silo angeordnet sind und miteinander fluchtend Schwenkachsenabschnitte bilden, erlauben sie ein Pendeln bzw. Schwenken des Silos in den Angriffsorganen der Arme des Fahrzeuges. Mit einer solchen Aufhängung könnte der Silo theoretisch um 360° gedreht werden. Vorteilhaft ist diese Anordnung von Achszapfen jedoch insbesondere im Hinblick darauf, daß die so orientierten Achszapfen orthogonal zu den Armen des Fahrzeuges verlaufen, so daß der gesamte Schwenkbereich der Arme zum Kippen oder Verschieben des Silos genutzt werden kann. Es ist vorgesehen, daß die Arme über 180° verschwenkbar, also überkopfverschwenkbar, sind.

Eine solche Verschwenkbarkeit der Arme erlaubt nicht nur ein Aufladen und Abladen des Silos, bei dem der Silo um etwa 90° geschwenkt wird, sondern insbesondere wird durch eine solche Schwenkbarkeit der Arme auch ein im Ergebnis Längsverschieben des liegenden Silos um doppelte Armeslänge möglich. Dies bietet eine besonders vorteilhafte Möglichkeit, den liegenden Silo auf der Ladefläche um doppelte Armeslänge zu verschieben, indem die Arme um etwa 180° geschwenkt werden. Dabei wird der Silo bei gleichzeitigem Verschieben bis in eine maximale Kippstellung von etwa 45° angehoben und dann absenkend weiter verschoben, bis er in eine zur ursprünglichen Horizontallage versetzte entsprechende Horizontallage gelangt.

Mit dieser Verschwenkbarkeit der Arme und der Ausbildung des Silos ist damit eine weitere Bewegungsmöglichkeit des Silos gegeben, die insbesondere bei der Lagerung oder der Veränderung der Lagerung des Silos vorteilhaft ist. Insbesondere könnten dadurch mehrere Silos in Längsrichtung intereinander angeordnet werden.

Um den Aktionsbereich der Arme, insbesondere auch im Hinblick auf den im vorhergehend geschilderten Bewegungsablauf zu vergrößern, sind die Arme längenveränderbar, beispielsweise teleskopierbar, ausgebildet. Dabei wird ein Ausfahren der Arme in der Regel nur durchgeführt werden, wenn sich die Arme etwa in einer Position befinden, bei der beispielsweise eine Teleskophydraulik nicht unnötig mit dem Gewicht des erfaßten Silos belastet wird, welches beispielsweise durchaus 15 bis 25 Tonnen betragen kann. Eine im Ergebnis horizontale Verschiebung eines Silos ist mit ausfahrbaren Armen unter Umständen um eine Silolänge oder mehr möglich. Es wäre auch möglich, den Silo aufgrund der Ausbildung der Arme länger auszubilden, als üblich. Insbesondere werden die Angriffspunkte am Silo etwa im oberen Bereich des Silos angeordnet sein, sie können aber durchaus auch etwa in mittlerer Höhe am Silo angebracht sein.

Die Arme des Fahrzeuges sind einzeln und wahlweise auch synchron steuerbar, und zwar im Hinblick auf die Verschwenkung und die Längenänderung der Arme. Bei den meisten Bewegungsabläufen beim Bewegen des Silos wird es sinnvoll sein, beide Arme gleichmäßig und gleichzeitig zu bewegen. Die unabhängige Steuerung der Arme ist aber insbesondere dann von besonderem Vorteil, wenn der aufgestellte Silo, beispielsweise aufgrund von Bodenunebenheiten, noch besser ausgerichtet werden muß, da durch die Steuerung der jeweiligen Arme eine sehr präzise Ausrichtung und Justierung des Silos möglich ist.

Das Fahrzeug ist zusätzlich mit einer verlängerten Ladefläche, vorzugsweise mit einem Hänger ausgerüstet. Durch die mögliche besondere Verschwenkbarkeit der Arme kann ein Silo dann von der Ladefläche des Fahrzeuges horizontal auf den Hänger verschoben werden, wobei, wie bereits dargelegt, der Silo in einer Zwischenstellung etwa um 45° gekippt ist. Insbesondere in den Kippstellungen wird der Fußbereich des Silos vorzugsweise von einem verschiebbaren Schlitten gehalten.

Insgesamt kann, vorzugsweise mit Hänger, die gesamte Ladefläche des Fahrzeuges so groß ausgebildet sein, daß zwei oder drei Silos hintereinander gelagert und transportiert werden können, wobei durch Ausfahrbarkeit der Arme dieser gesamte Ladebereich ohne weiteres erfaßt werden kann und der Silo bzw. die Silos über diesen Bereich bewegt werden können.

Eine bevorzugte Ausführungsform des erfindungsgemäßen Silotransportsystems sieht vor, daß das Fahrzeug über den Silo sowohl beim Verschieben, als auch beim Absetzen, Aufrichten, Aufladen usw. führende Führungs- und Stützrollen verfügt.

Weiter ist vorzugsweise vorgesehen, daß das Fahrzeug über eine Transportverriegelung für den liegenden Silo verfügt. Hierbei kann es sich beispielsweise um ein einfaches, auf dem Kopf stehendes L-förmiges Halteorgan handeln, in das formschlüssig ein am Silo, beispielsweise tangential, angeordnetes Profil von hinten, also in Aufladerichtung, einschiebbar ist.

Weiter kann das erfindungsgemäße Fahrzeug zusätzlich über gegen den Erdboden bewegbare Stützbeine verfügen, die sich vorzugsweise im hinteren Bereich des Fahrzeuges befinden, also dort, wo das Fahrzeug beim Bewegen des Silos zusätzlich vom Gewicht des Silos belastet wird. Die Organe der Transportverriegelung sind vorzugsweise in der Ladefläche in irgendeiner Form versenkbar, beispielsweise abklappbar, so daß für andere Einsatzzwecke des Fahrzeuges die herkömmliche Ladefläche verbleibt. Außerdem stören derartige Organe der Transportverriegelung nicht, wenn ein aufgenommener Silo entlang der Ladefläche verschoben wird.

Ein in Verbindung mit der erfindungsgemäßen Transportvorrichtung zu verwendender Silo, für den selbständiger Schutz beansprucht wird, und der weitgehend etwa zapfenförmig vorstehende, das Erfassen des Silos mit etwa gabelförmigen Klauen ermöglichende, als wenigstens ein Paar vorhandene Angriffselemente aufweist, ist Kombinationsbestandteil der erfindungsgemäßen Transportvorrichtung.

Die Zapfen des Silos sind an ihren freien Enden knopfartig verdickt. Hierdurch wird ein Abrutschen der Erfassungsorgane eines Fahrzeuges verhindert. Es könnten auch andere Verdickungen oder Abrutschsicherungen vorgesehen sein. Insbesondere könnten die Angriffselemente auch als geschlossene Schleife oder Öse mit einem zapfenartigen Abschnitt ausgebildet sein.

Aus den bereits im vorhergehenden geschilderten Gründen sind die Zapfen etwa sekantiell zum Silobehälter miteinander fluchtend angeordnet, so daß der Silo insbesondere über den gesamten Schwenkbereich der Arme bewegt werden kann.

Der erfindungsgemäße Silo weist mehrere Paare von Zapfen entlang der Längserstreckung des Silobehälters auf, die etwa sprossenartig angeordnet sind. Hierdurch wäre der Aktionsbereich beim im Ergebnis horizontalen Verschieben des Silos vergrößerbar. Längenveränderbare Arme eines Fahrzeuges könnten zunächst ein Paar von Zapfen erfassen, ausgefahren werden, um den Silo horizontal zu verschieben, dann von den als Angriffselemente dienenden Zapfen gelöst werden, wieder eingefahren werden und das nächste Zapfenpaar erfassen, um den Silo um eine weitere Etappe vorzuschieben.

Damit die sprossenartig angeordneten Angriffselemente bzw. Zapfen beim Schwenken der Arme nicht stören, insbesondere nicht in den Schwenkbereich vorragen, kann bei wenigstens einigen der Angriffselemente vorgesehen sein, daß ihre Vorragung beseitigbar ist, indem die Zapfen beispielsweise umgeklappt, versenkt, umgesetzt oder abgenommen werden. Für umsetzbare Zapfen wäre sogar nur ein Sprossenpaar notwendig und verschiedene Anordnungspunkte für dieses Sprossenpaar. Beim Schwenken der Arme sollte nur das Zapfenpaar vorragend bleiben, welches unmittelbar von den Armen als Schwenkachsenabschnitte erfaßt wird.

Eine andere Weiterbildung des erfindungsgemäßen Silos sieht vor, daß er über einen etwa tangential zum Silo angeordneten Abschnitt eines Stangenprofils verfügt, der als Bestandteil einer Silotransportverriegelung in Funktion treten kann, indem die Enden des Stangenprofils zur Verriegelung des Silos von hinten, d.h. vom Heck des Fahrzeuges her, formschlüssig in als Transportverriegelung dienende Halteprofile der Silotransportvorrichtung einschiebbar sind.

Ausführungsbeispiele, aus denen sich weitere erfinderische Merkmale ergeben, sind in der Zeichnung dargestellt. Es zeigen:
- Fig. 1: eine Seitenansicht eines in Transportlage auf dem hinteren Bereich eines Transportfahrzeuges liegenden Silos mit einer zusätzlich angedeuteten verschobenen Stellung,
- Fig. 2: eine der Fig. 1 entsprechende Darstellung mit zusätzlich angedeuteter, halb gekippter Stellung des Silos,
- Fig. 3: eine den Fig. 1 und 2 entsprechende Darstellung mit zusätzlich angedeuteter Position des aufgestellten Silos,
- Fig. 4: eine Stirnansicht des Fahrzeuges mit Silo in Transportlage von hinten bei einem Schnitt durch den Fußbereich des Silos,
- Fig. 5: eine Detailvergrößerung der Stirnansicht gemäß Fig. 4,
- Fig. 6: eine Teilvergrößerung aus der Darstellung entsprechend den Fig. 1 bis 3 und
- Fig. 7: ein zweites Ausführungsbeispiel eines Transportfahrzeuges mit Hänger unter Andeutung eines Silo-Bewegungsablaufes.

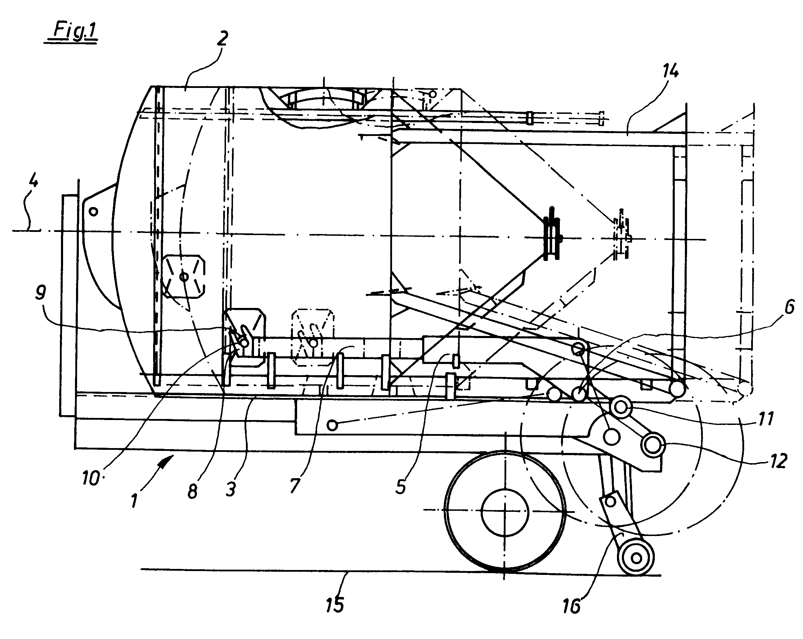

Die Fig. 1 bis 3 zeigen den hinteren Bereich eines Transportfahrzeuges 1, auf dem in horizontaler Transportlage ein Silo 2 angeordnet ist. Bei dem Silo handelt es sich um ein lotrecht aufzustellendes Freifallsilo mit einem weitgehend zylindrisch ausgebildeten Silobehälter.

Zusätzlich ist in der Abfolge der Fig. 1 bis 3 der Bewegungsablauf beim Abladen und Aufstelllen des Silos mit strichpunktierten Linien angedeutet, dem in umgekehrter Reihenfolge der Aufladeprozeß entspricht.

In Transportlage liegt der Silo 2 auf der Ladefläche 3 des Transportfahrzeuges 1. Unterhalb der horizontalen Längsmittelebene 4 befinden sich an beiden Seiten des Silos 2 zwei Arme 5 des Transportfahrzeuges 1. Diese Arme sind über zum hinteren Rand der Ladefläche 3 parallel verlaufende Achsen 6 am Transportfahrzeug 1 schwenkbar angelenkt. Sie sind also in vertikalen Ebenen schwenkbar. Außerdem sind die Arme 5 aufgrund von Teleskopeinschüben 7 in ihrer Länge veränderbar, insbesondere ausfahrbar. An ihren freien Enden weisen die Arme 5 gekröpft, das heißt abgewinkelt, angesetzte, gabelförmige Klauen 8 auf, deren offener Bereich jeweils mit einem Verschlußelement 9 verschlossen ist. Der offene Bereich der Klauen 8 ist aufgrund der gekröpften Ausbildung der Arme 5 schräg noch oben gerichtet offen, und zwar in Richtung von der Ladefläche 3 weg. Die Klauen 8 umgreifen am Silo 2 seitlich angeordnete Zapfen 10, die sekantiell, also insbesondere nicht radial, am Silo 2 angeordnet sind.

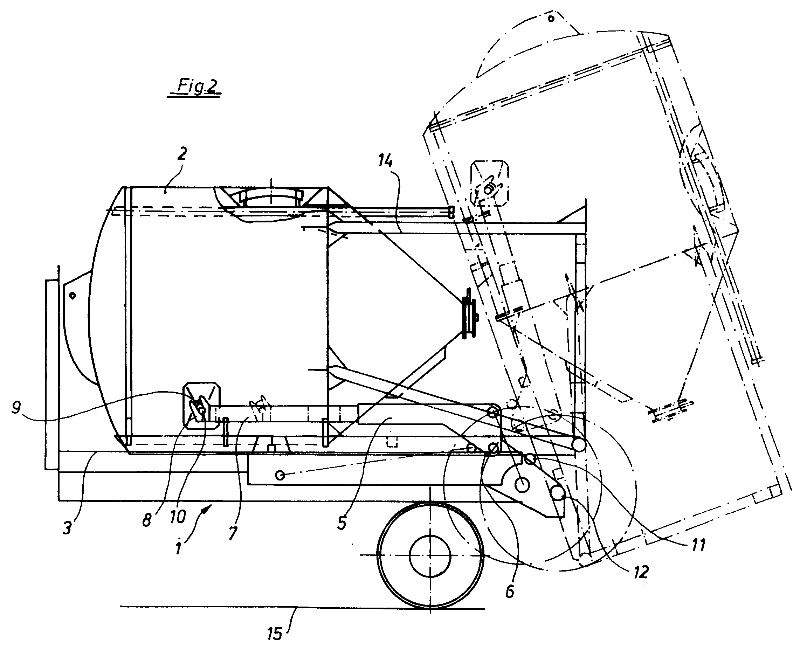

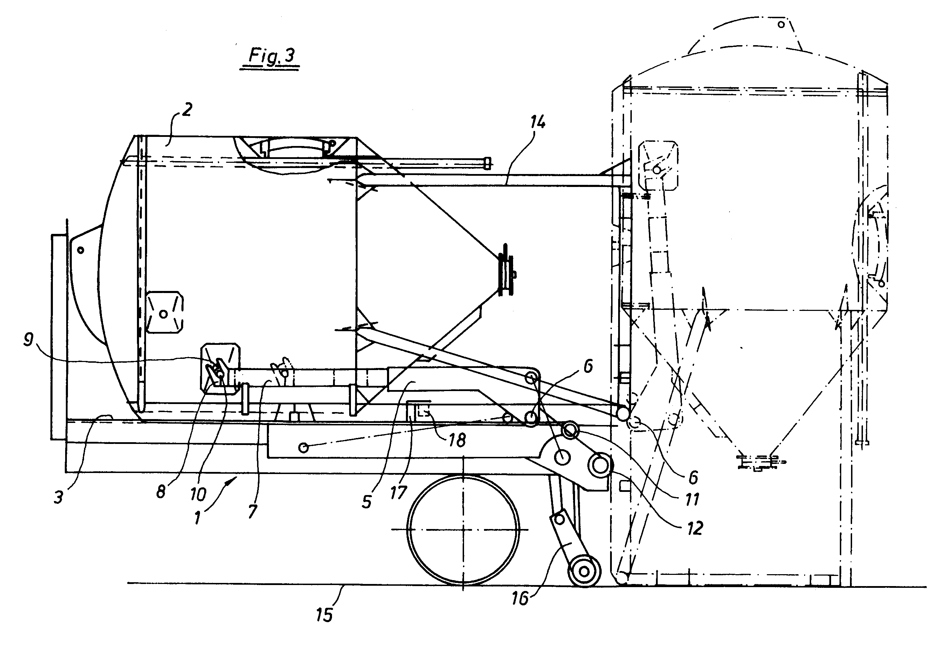

Am hinteren Ende der Ladefläche 3 sind etwas über die Ladefläche 3 hervorstehende Führungsrollen 11 zur Führung des Silos 2 insbesondere beim Verschieben angeordnet. Etwas tiefer und etwas weiter nach hinten verlagert sind zudem Stützrollen 12 vorgesehen, die beim Aufstellen oder auch beim Aufladen des Silos 2 (siehe Fig. 2 und 3) in Aktion treten.

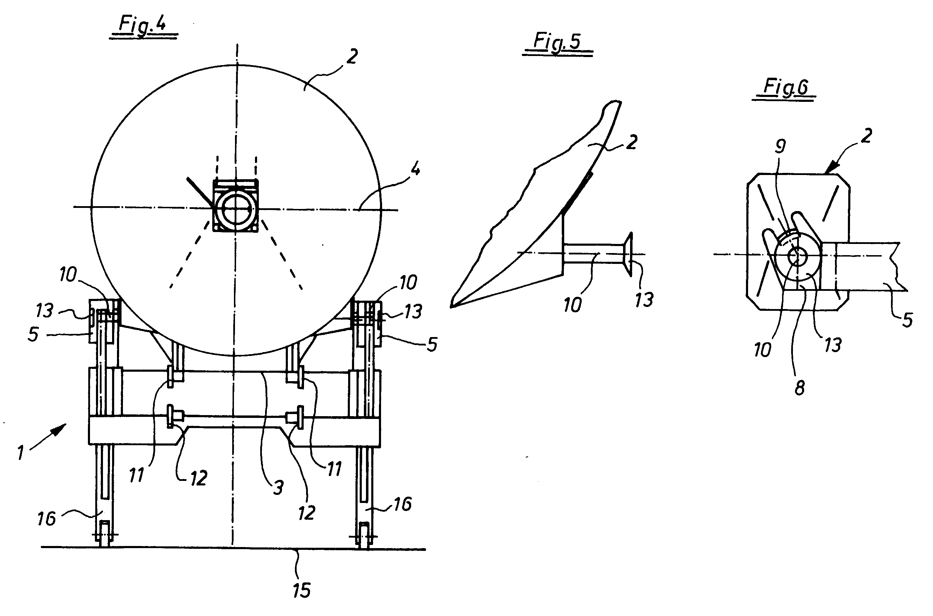

Der Klauen/Zapfenbereich ist in der Fig. 6 noch einmal als vergrößertes Detail herausgezeichnet worden. In dieser Detailzeichnung ist der Eingriff des Zapfens 10 in die Klaue 8 deutlich erkennbar. Außerdem ist erkennbar, daß der Zapfen 10 an seinem freien Ende eine knopfartige Verdickung 13 aufweist.

Die Transportlage, in der der Silo 2 horizontal vollständig auf die Ladefläche 3 des Transportfahrzeuges 1 aufgeschoben ist, ist in den Fig. 1 bis 3 mit durchgezeichneten, vollen Linien dargestellt. Im übrigen zeigen die Figuren 1 bis 3 mit strichpunktierten Linien weitere Positionen des Silos 2 bis zum Aufstellen des Silos 2.

Aus der Fig. 1 ist erkennbar, daß zum Abladen der Silo zunächst durch ein Einfahren der Teleskopausschübe 7, das heißt, durch Verkürzen der Arme 5, ein Stück weit über den hinteren Rand der Ladefläche 3 horizontal verschoben wird, so daß ein Teil des Fußbereiches 14 des Silos 2 bereits nach hinten über die Ladefläche 3 vorsteht.

Sodann wird durch Schwenken der Arme 5 um die Achsen bzw. Achsenabschnitte 6 der Silo 2 aufgerichtet, und zwar in der Fig. 2 bis in eine gekippte Zwischenstellung und schließlich in der Fig. 3 bis in die aufrechte Stellung eines aufgestellten Silos 2. Bei diesem Aufstellvorgang treten die Stützrollen 12 zusätzlich in Aktion.

Nachdem die aufrechte Position gemäß Fig. 3 erreicht ist, kann der Silo 2 noch etwas genauer justiert bzw. ausgerichtet werden, indem die Arme 5 einzeln angesteuert und in ihrer Schwenkposition oder Längenerstreckung einzeln variiert werden. Dies kann beispielsweise geschehen, bis der Silo 2 auch bei Bodenunebenheiten möglichst lotrecht und fest steht. Die vorhergehenden Bewegungsabläufe der Arme laufen per Synchronsteuerung vorzugsweise synchron ab.

In den Fig. 1 bis 3 ist außerdem erkennbar, daß am hinteren Ende des Transportfahrzeuges 1 gegen den Erdboden 15 bewegbare Stützbeine 16 vorgesehen sind.

Insbesondere in der Fig. 3 ist erkennbar, daß im Bereich der Ladefläche 3 eine Transportverriegelung für den Silo 2 vorgesehen ist. Diese umfaßt im wesentlichen ein von der Ladefläche 3 aufragendes, nach hinten offenes L-förmiges Halteorgan 17 und ein tangential am Silo 2 angeordnetes, von hinten formschlüssig in das Halteorgan 17 einschiebbares Stangenprofil 18. Die Halteorgane 17 sind quer zur Fahrtrichtung einwärts klappbar, um in der Ladefläche 3 bündig anschließend versenkt zu werden.

Die Fig. 4 zeigt eine Stirnansicht des Transportfahrzeuges 1 mit Silo 2 von hinten bei einem Schnitt durch den Fußbereich 14 des Silos.

Aus dieser Darstellung ist insbesondere noch einmal aus einer anderen Perspektive erkennbar, wie die Zapfen 10 des Silos 2 von den Armen 5 des Transportfahrzeuges 1 ergriffen werden, insbesondere, daß die Zapfen 10 sekantiell zum Silobehälter orientiert sind. Außerdem ist erkennbar, daß die Arme 5 so unterhalb der Längsmittelebene 4 des Silos 2 in den Grenzen der von dieser Ebene überdeckten Fläche angeordnet sind, daß sie an der in Transportlage als Unterseite des Silos 2 anzusprechenden Seite des Silos anliegen und seitlich die Abmessungsbreite des Silos 2 nicht überschreiten, so daß sowohl mit dem Durchmesser des Silos 2, als auch mit der Breite des Transportfahrzeuges 1 die zulässige Höchstbreite eingehalten, aber auch ausgenutzt werden kann.

Fig. 5 zeigt als Detailvergrößerung die Anordnung und Ausbildung eines Zapfens 10 am Silo 2 entsprechend der Perspektive der Fig. 4. Gleiche Bauelemente sind mit den gleichen Bezugszahlen bezeichnet, wie in Fig. 6.

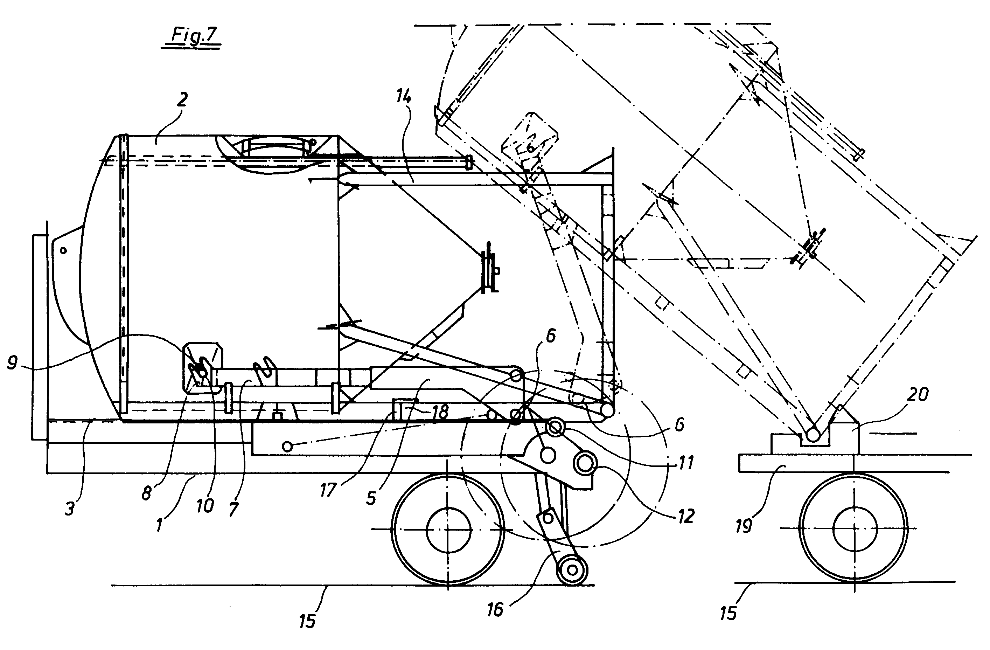

Fig. 7 zeigt ein anderes Ausführungsbeispiel bzw. ein erweitertes Ausführungsbeispiel eines erfindungsgemäßen Transportfahrzeuges 1, das zusätzlich einen Hänger 19 aufweist.

Statt, wie in den Fig. 1 bis 3 dargestellt, den Silo 2 abzuladen und aufzurichten, kann gemäß der Darstellung der Fig. 7 der auf der Ladefläche 3 des Zugfahrzeuges horizontal gelagerte Silo auch so weit nach hinten verschoben werden, bis die hintere Kante des Fußbereiches 14 des Silos 2 von einem in Fahrzeuglängsrichtung verschiebbaren Schlitten 20 erfaßt wird. Danach kann unter Rückwärtsbewegung des Schlittens 20 durch Verschwenkung der Arme 5 der Silo 2 über die in Fig. 7 mit strichpunktierten Linien angedeutete Zwischenkippstellung auf den Hänger 19 verschoben werden, bis er dort wiederum horizontal abgelegt ist, im Ergebnis also um eine Silolänge bzw. um eine doppelte Länge der Arme 5 horizontal verschoben ist.

Je nach Auslegung der Teleskopierbarkeit der Arme 5 und beispielsweise zusätzlich durch Umgreifmöglichkeiten der Arme 5 an sprossenartig angeordneten Zapfen 10, kann der Aktionsbereich der Arme 5 soweit vergrößert werden, daß der Silo 2 auf diese Weise um erhebliche Strecken verschoben werden kann, insbesondere auch soweit, daß beispielsweise auf dem Hänger 19 zwei horizontal gelagerte Silos hintereinander Platz finden und mit den Armen 5 in diese jeweiligen Positionen gebracht werden können.

Bei dem Bewegungsaublauf gemäß Fig. 7 aber auch bei dem Bewegungsablauf gemäß den Fig. 1 bis 3 wird in der Regel beachtet, daß die Arme 5 beim Verschwenken der Arme eingefahren sind und ein Ausfahren der Arme 5 nur zur Horizontalverschiebung oder zur Ausrichtung des Silos in der Stellung der Fig. 3 erfolgt, nämlich immer nur dann, wenn möglichst wenig Gewicht des Silos die Hydraulik der ausfahrbaren Arme 5 belastet.

## Patentansprüche

1. Silotransportvorrichtung, umfassend ein auf einem Fahrzeug angeordnetes Wechselgerät in Form eines Absetzkippers, der zwei im wesentlichen parallel zueinander angeordnete, im hinteren Bereich einer Fahrzeug-Ladefläche angelenkte, um zum hinteren Rand der Ladefläche etwa parallel laufende Achsen schwenkbare Arme aufweist, an deren freien Enden Angriffsorgane angeordnet sind, mit denen an einem im wesentlichen zylinderischen Silo befindliche Angriffspunkte erfaßbar sind, die am Silo in sekantieller Orientierung und miteinander fluchtend derart angeordnet sind, daß sich die Arme in Bezug zum auf der Ladefläche liegend aufgenommenen Silo unterhalb der Ebene des dabei horizontalen Silo-Durchmessers und innerhalb der Grenzen der von dieser horizontalen Durchmesserebene überspannten Fläche befinden, **dadurch gekennzeichnet,**
daß jedes Angriffsorgan weitgehend als zum wenigstens teilweisen Umgriff eines als Angriffspunkt am Silo (2) dienenden Zapfens (10) vorgesehene gabelförmige Klaue (8) ausgebildet ist,
daß die Arme (5) des Fahrzeugs (1) von einer etwa waagerechten Position über der Ladefläche (3) mehr als 180° in eine vom Fahrzeug (1) weg nach unten geneigte Stellung verschwenkbar angelenkt sind,
daß die Arme (5) des Fahrzeugs (1) längenveränderbar, vorzugsweise teleskopierbar, sind,
daß jeder Arm (5) einzeln in bezug auf Längenveränderung und/oder Verschwenkung steuerbar ist, und
daß eine Ladeflächenverlängerung vorgesehen ist, die einen längsverfahrbaren Schlitten (20) aufweist, der mit einer Aufnahme für vorzugsweise eine Kante des Fußbereiches (14) des Silos (2) versehen ist.

2. Silotransportvorrichtung nach Anspruch 1, dadurch gekennzeichnet, daß die Ladefläche (3) des Fahrzeugs (1) zur Aufnahme von wenigstens zwei, vorzugsweise mehr als zwei, hintereinanderliegenden transportierten Silos (2) eingerichtet ist.

3. Silotransportvorrichtung nach Anspruch 1, dadurch gekennzeicnet, daß die Ladeflächenverlängerung die Ladefläche eines an das Fahrzeug (1) anhängbaren Hängers (19) ist.

4. Silotransportvorrichtung nach Anspruch 1, dadurch gekennzeichnet, daß der offene Bereich der Gabel ein diesen Bereich überbrückendes zu öffnendes Verschlußelement (9) aufweist.

5. Silotransportvorrichtung nach Anspruch 1, dadurch gekennzeichnet, daß das Angriffsorgan bezüglich der Längserstreckung des Armes (5) in Richtung von der Ladefläche (3) des Fahrzeugs (1) weg als Kröpfung an dem jeweiligen Arm (5) angeordnet ist.

6. Silotransportvorrichtung nach Anspruch 1, dadurch gekennzeichnet, daß eine Synchronsteuerung zur gleichmäßigen und gleichzeitigen Bewegung der Arme (5) vorgesehen ist.

7. Silotransportvorrichtung nach einem oder mehreren der Ansprüche 1 bis 6, gekennzeichnet durch im Bereich des hinteren Randes der Ladefläche (3) des Fahrzeugs (1) aus der Ladefläche (3) hervorstehende Führungsrollen (11) zur Führung des Silos (2).

8. Silotransportvorrichtung nach einem der Ansprüche 1 bis 7, gekennzeichnet durch tiefer als die Ladefläche (3) und ein Stück weit nach hinten verlagerte Stützrollen (12) für den Silo (2).

9. Silotransportvorrichtung nach einem der Ansprüche 1 bis 8, dadurch gekennzeichnet, daß im Bereich der Ladefläche (3) des Fahrzeugs (1) eine Transportverriegelung (17,18) für den Silo (2) vorgesehen ist.

10. Silotransportvorrichtung nach Anspruch 9, dadurch gekennzeichnet, daß die Transportverriegelung am Fahrzeug (1) angeordnete, auf dem Kopf stehend L-förmig aufragend, nach hinten offene Halteprofile (17), die vorzugsweise in die Ladefläche (3) versenkbar angeordnet sind, umfaßt, in die Enden eines am Silo (2) etwa tangential angeordneten Stangenprofils (18) zur Verriegelung von hinten formschlüssig einschiebbar sind.

11. Silotransportvorrichtung nach einem oder mehreren Ansprüchen 1 bis 10, dadurch gekennzeichnet, daß das Fahrzeug (1) vorzugsweise im hinteren Bereich gegen den Erdboden (15) bewegbare Stützbeine (16) aufweist.

12. In Verbindung mit der Silotransportvorrichtung nach den Ansprüchen 1 bis 11 zu verwendender Silo, vorzugsweise aufrecht stellbarer, druckbelastbarer Freifallsilo, welcher einen zumindest in einem Abschnitt weitgehend etwa zylinderischen Silobehälter zur Aufnahme von Schüttgut umfaßt, welcher einen Durchmesser bis zu 2,5 m aufweist und der das Erfassen des Silos mit etwa gabelförmigen Klauen ermöglichende, als wenigstens ein Paar vorhandene Zapfen hat, die an ihren freien Enden mit knopfartigen Verdickungen versehen und etwa sekantiell zum Silobehälter miteinander fluchtend angeordnet sind, dadurch gekennzeichnet, daß mehrere Paare von Zapfen (10) entlang der Längserstreckung des Silobehälters (2) sprossenartig angeordnet bzw. anordbar sind.

13. Silo nach Anspruch 12, dadurch gekennzeichnet, daß bei wenigstens einigen der Zapfen (10) ihre Vorragung beseitigbar ist, indem die Zapfen (10) vorzugsweise umklappbar, versenkbar umsetzbar oder abnehmbar ausgebildet sind.

14. Silo nach einem der Ansprüche 12 und 13, gekennzeichnet durch wenigstens einen etwa tangential zum Silo (2) angeordneten Abschnitt eines Stangenprofils (18), dessen Enden zur Verriegelung des Silos (2) von hinten formschlüssig in als Transportverriegelung dienende Halteprofile (17) der Silotransportvorrichtung einschiebbar sind.

## Claims

1. A silo transportation arrangement, comprising a change-over device arranged on a vehicle and in the form of a lift-on lift-off tipper having two arms arranged substantially parallel to one another, articulated in the rear region of a vehicle loading surface and pivotable about axes extending substantially parallel to the rear edge of the loading surface, engagement members being arranged on the free ends of the arms and having the function of engaging contact points provided on a substantially cylindrical silo and being secantly oriented on the silo and aligned with each other in such a manner that the arms, in relation to the silo lying on the loading surface, are located below the plane of the horizontal silo diameter and within the boundaries of the surface covered by this horizontal diametral plane, characterised in that each engagement member is substantially formed as a fork-shaped claw (8) provided for at least partially surrounding a pin (10) serving as a contact point on the silo (2), in that the arms (5) of the vehicle (1) are articulated so as to be pivotable more than 180° from a substantially horizontal position above the loading surface (3) into a position inclined downwards away from the vehicle (1), in that the arms (5) of the vehicle (1) are length-adjustable, preferably telescopic, in that each arm (5) is individually controllable with respect to length adjustment and/or pivoting, and in that a loading-surface extension is provided which has a longitudinally displaceable slide (20) provided with a receptacle for preferably one edge of the foot region (14) of the silo (2).

2. A silo transportation arrangement according to claim 1, characterised in that the loading surface (3) of the vehicle (1) is arranged to receive at least two, preferably more than two transported silos (2) lying one behind the other.

3. A silo transportation arrangement according to claim 1, characterised in that the loading-surface extension is the loading surface of a trailer (19) attachable to the vehicle (1).

4. A silo transportation arrangement according to claim 1, characterised in that the open region of the fork has a closing element (9) to be opened and bridging this region.

5. A silo transportation arrangement according to claim 1, characterised in that the engagement member, relative to the longitudinal extent of the arm (5), is provided as a bend on the respective arm (5) directed away from the loading surface (3) of the vehicle (1).

6. A silo transportation arrangement according to claim 1, characterised in that a synchronising control unit is provided for moving the arms (5) uniformly and simultaneously.

7. A silo transportation arrangement according to one or more of claims 1 to 6, characterised by guide rollers (11) protruding from the loading surface (3) of the vehicle (1) in the region of the rear edge of the loading surface (3) and provided for guiding the silo (2).

8. A silo transportation arrangement according to any one of claims 1 to 7, characterised by supporting rollers (12) arranged lower than the loading surface (3) and slightly further back and provided for the silo (2).

9. A silo transportation arrangement according to any one of claims 1 to 8, characterised in that a transportation securing arrangement (17, 18) for the silo (2) is provided in the region of the loading surface (3) of the vehicle (1).

10. A silo transportation arrangement according to claim 9, characterised in that the transportation securing arrangement comprises holding profiles (17) arranged on the vehicle (1) and open towards the rear, projecting in the manner of an inverted L, the holding profiles (17) preferably being sinkable into the loading surface (3) and being positively insertable into the ends of a rod profile (18), arranged substantially tangentially on the silo (2), for securing from the rear.

11. A silo transportation arrangement according to one or more of claims 1 to 10, characterised in that the vehicle (1) has supporting legs (16) movable towards the ground (15), preferably in the rear region.

12. A silo to be used in conjunction with the silo transportation arrangement according to claims 1 to 11, preferably a pressurisable free-fall silo which can be placed upright, comprising an at least partially substantially cylindrical silo casing for holding bulk material and having a diameter of up to 2.5 m, and comprising at least one pair of pins enabling the silo to be engaged by substantially fork-shaped claws, the pins being provided with button-type thickenings at their free ends and being arranged substantially secantly to the silo container in alignment with each other, characterised in that a plurality of pairs of pins (10) are arranged or are arrangeable in a rung-like manner along the longitudinal extent of the silo container (2).

13. A silo according to claim 12, characterised in that the projection of at least some of the pins (10) can be eliminated, the pins (10) preferably being formed so as to be foldable, countersinkable, movable or detachable.

14. A silo according to either one of claims 12 and 13, characterised by at least one portion of a rod profile (18) being arranged substantially tangentially to the silo (2), the ends of the rod profile (18) being positively insertable into holding profiles (17) - serving as a transportation securing arrangement - of the silo transportation arrangement for securing the silo (2) from the rear.

## Revendications

1. Dispositif de transport de silo comprenant un dispositif amovible monté sur un véhicule, sous la forme d'une benne basculante, qui comporte deux bras sensiblement parallèles entre eux, articulés dans la zone arrière d'une suface de chargement de véhicule, pouvant pivoter autour de tenons à peu près parallèles au bord arrière de la surface de chargement, aux extrémités libres desquels sont placés des organes d'attaque, avec lesquels peuvent être saisis des points d'attaque se trouvant sur un silo sensiblement cylindrique, qui sont orientés de manière sécante sur le silo et sont alignés entre eux de telle sorte que les bras se trouvent, par rapport au silo logé horizontalement sur la surface de chargement, au-dessous du plan du diamètre du silo, horizontal dans ce cas, et à l'intérieur des limites de la surface recouverte par ce plan de diamètre horizontal,
caractérisé
en ce que chaque organe d'attaque est configuré pratiquement en griffe (8) en forme de fourche, prévue pour entourer au moins partiellement un tenon (10) servant de point d'attaque sur le silo (2),
en ce que les bras (5) du véhicule (1) s'articulent de manière à pouvoir pivoter d'une position à peu près horizontale, au-dessus de la surface de chargement (3), sur plus de 180°, dans une position inclinée vers le bas à partir du véhicule (1),
en ce que les bras (5) du véhicule (1) sont de longueur variable, de préférence télescopiques,
en ce que chaque bras (5) peut être commandé individuellement par rapport à la variation de longueur et/ou le pivotement et
en ce qu'il est prévu un prolongement de la surface de chargement, qui comporte un chariot (20) déplaçable longitudinalement, qui est pourvu d'un logement pour de préférence un bord de la zone de pied (14) du silo (2).

2. Dispositif de transport de silo selon la revendication 1, caractérisé en ce que la surface de chargement (3) du véhicule (1) est équipée pour recevoir au moins deux, de préférence plus de deux, silos (2) transportés disposés l'un derrière l'autre.

3. Dispositif de transport de silo selon la revendication 1, caractérisé en ce que le prolongement de la surface de chargement est la surface de chargement d'une remorque (19) à accrocher au véhicule (1).

4. Dispositif de transport de silo selon la revendication 1, caractérisé en ce que la zone ouverte de la fourche comporte un élément de fermeture (9) à ouvrir, franchissant cette zone.

5. Dispositif de transport de silo selon la revendication 1, caractérisé en ce que l'organe d'attaque est disposé en tant que coude sur le bras (5) respectif, par rapport à l'extension longitudinale du bras (5), en s'éloignant de la surface de chargement (3) du véhicule (1).

6. Dispositif de transport de silo selon la revendication 1, caractérisé en ce qu'il est prévu une commande synchrone pour le déplacement uniforme et simultané des bras (5).

7. Dispositif de transport de silo selon une ou plusieurs des revendications 1 à 6, caractérisé par des rouleaux de guidage (11), dépassant dans la zone du bord arrière de la surface de chargement (3) du véhicule (1), pour le guidage du silo (2).

8. Dispositif de transport de silo selon l'une des revendications 1 à 7, caractérisé par des rouleaux d'appui (12) pour le silo (2), plus bas que la surface de chargement (3) et déplacés un peu vers l'arrière.

9. Dispositif de transport de silo selon l'une des revendications 1 à 8, caractérisé en ce qu'il est prévu un verrouillage de transport (17, 18) pour le silo (2), dans la zone de la surface de chargement (3) du véhicule (1).

10. Dispositif de transport de silo selon la revendication 9, caractérisé en ce que le verrouillage de transport comporte des profilés de maintien (17), ouverts vers l'arrière, placés sur le véhicule (1), se tenant verticalement en L sur la tête, qui sont de préférence encastrables dans la surface de chargement (3), qui peuvent être introduits de l'arrière, par concordance de forme, dans les extrémités d'un profilé de barre (18), disposé à peu près tangentiellement sur le silo (2), pour le verrouillage.

11. Dispositif de transport de silo selon une ou plusieurs des revendications 1 à 10, caractérisé en ce que le véhicule (1) présente des jambes d'appui (16) déplaçables de préférence dans la zone arrière contre le sol (15).

12. Silo à utiliser en liaison avec le dispositif de transport de silo selon les revendications 1 à 11, de préférence silo à chute libre, pouvant être soumis à pression, à dresser verticalement, qui comprend un réservoir de silo au moins presque cylindrique dans une partie, destiné à recevoir des produits en vrac, qui présente un diamètre pouvant aller jusqu'à 2,5 m et qui possède au moins une paire de tenons, permettant la saisie du silo avec des griffes à peu près en forme de fourche, qui à leurs extrémités libres sont pourvus de surépaisseurs à la manière de boutons et qui sont alignés entre eux, de manière à peu près sécante sur le réservoir de silo, caractérisé en ce que plusieurs paires de tenons (10) sont disposés ou disposables le long de l'extension longitudinale du réservoir de silo (2), à la manière de barreaux.

13. Silo selon la revendication 12, caractérisé en ce que pour quelques tenons (10) au moins on peut supprimer leur dépassement, en ce que les tenons (10) sont configurés de préférence rabattables, encastrables, déplaçables ou amovibles.

14. Silo selon l'une des revendications 12 ou 13, caractérisé par au moins une portion, à peu près tangentielle au silo (2), d'un profilé de barre (18), dont les extrémités peuvent être introduites de l'arrière, par concordance de forme, dans des profilés de maintien (17), servant de verrrouillage de transport, du dispositif de transport de silo, pour le verrouillage du silo (2).
